(19) Europäisches Patentamt
European Patent Office
Office européen des brevets

(11) Veröffentlichungsnummer: **0 383 089 B1**

(12) **EUROPÄISCHE PATENTSCHRIFT**

(45) Veröffentlichungstag der Patentschrift: **06.04.94**

(51) Int. Cl.5: **C08G 18/18**, C08G 18/58, H01B 3/00

(21) Anmeldenummer: **90101755.8**

(22) Anmeldetag: **30.01.90**

# (54) Kalthärtende Reaktionsharzmischung und deren Verwendung.

(30) Priorität: **11.02.89 DE 3904156**

(43) Veröffentlichungstag der Anmeldung:
**22.08.90 Patentblatt 90/34**

(45) Bekanntmachung des Hinweises auf die Patenterteilung:
**06.04.94 Patentblatt 94/14**

(84) Benannte Vertragsstaaten:
**AT BE CH DE FR GB IT LI NL SE**

(56) Entgegenhaltungen:
**EP-A- 0 130 454**
**US-A- 3 721 650**

(73) Patentinhaber: **BAYER AG**

**D-51368 Leverkusen(DE)**

(72) Erfinder: **Müller, Hanns-Peter, Dr.**
**Weizenfeld 36**
**D-5060 Bergisch Gladbach 2(DE)**
Erfinder: **Franke, Joachim, Dr.**
**An der Ruthen 2**
**D-5000 Köln 80(DE)**
Erfinder: **Botta, Artur**
**Bodelschwinghstrasse 119**
**D-4150 Krefeld(DE)**

EP 0 383 089 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft bei Raumtemperatur härtende Reaktionsharzmischungen und deren Verwendung zur Imprägnierung von Isolierungen elektrischer Geräte und zur Herstellung von Formkörpern nach dem Gießverfahren und als Ausgangskomponenten zur Herstellung von Beschichtungen, verklebungen und Schaumstoffen.

Reaktionsharzgemische aus organischen Polyisocyanaten, organischen (Poly)-Epoxiden und speziellen Katalysatoren mit Isocyanurat- und Oxazolidinonstrukturen werden hergestellt durch Polyaddition von (Poly)-Epoxiden mit Polyisocyanaten unter Verwendung von Härtungskatalysatoren siehe EP-A-0 130 454, DE-A-3 323 084 oder EP-A-0 272 563. Die Verwendung von Katalysatoren insbesondere tert. Amin ist bekant DE-AS 1 115 922. Der Einsatz dieser Mischungen stößt jedoch in der Technik auf Schwierigkeiten, da die bekannten Beschleuniger bzw. Beschleunigersysteme die z.B. auch in DE-A-24 44 458 genannt sind, entweder eine zu rasche oder zu langsame Härtung der Mischungen bewirken, so daß es z.B. nicht möglich ist, Isolierungen oder Formstoffe mit einem derartigen Beschleunigergemisch wirtschaftlich zu fertigen, da die Viskosität der Reaktionsharzmischung entweder zu rasch ansteigt und so eine vollständige Durchtränkung nicht mehr gewährleistet ist, oder beim Eintragen der Beschleuniger in die Reaktionsharzmischungen an der Harzberührungsfläche Sofortreaktionen ablaufen, die dann zur unerwünschten Quallenbildung führen. Bei trägeren Beschleunigersystemen findet eine Härtung bei Raumtemperatur in einer wirtschaftlich vertretbaren Zeit nicht statt Die aminischen Beschleuniger des Standes der Technik haben darüber hinaus einen unangenehmen Geruch.

Aufgabe der vorliegenden Erfindung ist es daher, bei Raumtemperatur härtende Reaktionsharzmischungen aus Polyisocyanat/(Poly)-Epoxidharzverbindungen, zu entwickeln, die geruchsarm sind und deren Viskosität sich bei Raumtemperatur nicht sofort ändert und die trotzdem in wirtschaftlich kurzen Zeiten aushärten.

Gegenstand der Erfindung sind bei Raumtemperatur härtende, flüssige Reaktionsharzmischungen enthaltend wenigstens ein Polyisocyanat a) und wenigstens ein Polyepoxid b), deren Äquivalenzverhältnis von Isocyanat zu Epoxidgruppen von 1,2.1 bis 500:1 entspricht, erhältlich aus

a) mindestens einem organischen Polyisocyanat
b) mindestens einer mindestens zwei Epoxidgruppen aufweisenden organischen Verbindung
c) einen Ester einer organischen Sulfonsäure, Methyliodid und/oder Dimethylsulfat und
d) gegebenenfalls weiteren Hilfs- und Zusatzstoffen

dadurch gekennzeichnet, daß die Mischungen wenigstens ein Amin folgender Struktur I in einer Menge von 0,01-10 Gew.-% bezogen auf Polyisocyanat/Polyepoxidharzmischung aufweisen

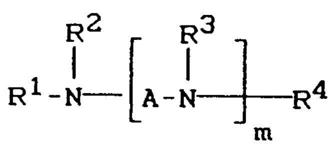

(I)

in der bedeuten

| | |
|---|---|
| A | gleich oder verschieden, verzweigtes oder unverzweigtes, gegebenenfalls substituiertes $C_{1-20}$-Alkylen, $C_{2-20}$-Alkenylen, $C_{2-20}$-Alkinylen, $C_{2-20}$-Alkyliden, $C_{3-12}$-Cycloalkylen-, $C_{7-20}$-Aralkenylen, wobei als Substituenten dieses und der folgenden Reste Halogen, Niederalkyl, Niederalkoxy, Niederalkylthio und Niederakyloxycarbonyl in Frage kommen, |
| m | eine ganze Zahl von 0 bis 30, |
| $R^1$, $R^2$ und $R^3$ | gleich oder verschieden, gegebenenfalls substituiertes Aralkyl- oder Polyaralkyl der allgemeinen Formel II, |

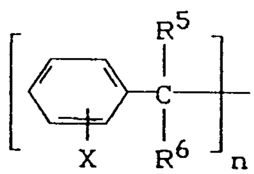

(II)

in der bedeuten

$R^5$ und $R^6$ gleich oder verschieden, Wasserstoff oder Niederalkyl,

X für Wasserstoff, Niederalkyl, Niederalkoxy, Niederalkoxycarbonyl oder Halogen und

n eine ganze Zahl von 1 bis 50 und

$R^4$ verzweigtes oder unverzweigtes, gegebenenfalls substituiertes $C_{1-20}$-Alkyl, Alkenyl oder Alkinyl, $C_{3-12}$-Cycloalkyl oder einen der unter $R^1$ bis $R^3$ angegebenen Substituenten.

Als Alkyl-, Alkenyl-, Alkinyl-, Alkylen-, Alkenylen-, Alkinylen- und Alkylidenreste der Formeln (I) und (II) kommen solche mit 1 bis 20, bevorzugt 1 bis 12, besonders bevorzugt 1 bis 6 Kohlenstoffatomen in Frage. Genannt seien: Methyl, Ethyl, Propyl, n-Butyl, Isobutyl, Hexyl, Ethylhexyl, Dexyl und Stearyl, Vinyl, (Iso)-Propenyl, Allyl, Butenyl, Isobutenyl, Hexenyl, Octenyl, Dodecenyl, Ethinyl, Butinyl, Hexinyl, Methylen, Ethylen, Propylen, Butylen, Isobutylen, (Neo)pentylen, Hexylen, (Iso)octylen, Decylen, Octadecylen, Vinylen, Butenylen, Butadienylen, Octenylen, Heptadecenylen, Ethinylen, Butinylen, Octinylen, Ethyliden, Propyliden, Butyliden, Isobutyliden, (Iso)hexyliden, (Iso)octyliden und Octadecyliden, bevorzugt Methyl, Ethyl, n-Butyl, Isobutyl und Ethylhexyl, Vinyl, (Iso)propenyl, Allyl, (Iso)butenyl, Ethinyl, Butinyl, Methylen, Ethylen, Propylen, Butylen, Isobutylen, (Neo)pentylen, Hexylen, Decylen, Vinylen, Butenylen, Octenylen, Ethinylen, Butinylen, Ethyliden, Propyliden, Butyliden, Isobutyliden, (Iso)hexyliden und (Iso)octyliden, besonders bevorzugt Methyl, Ethyl, (Iso)butyl, Allyl, Hexyl, Methylen, Ethylen, Propylen, (Iso)butylen, (Neo)pentylen, Hexylen, Ethyliden, Propyliden und (Iso)butyliden.

Als Cycloalkyl- sowie als Cycloalkylenreste kommen solche mit 3 bis 12 Kohlenstoffatomen, bevorzugt 5 bis 7 Kohlenstoffatomen in Frage. Genannt seien Cyclohexyl, Methylcyclohexyl, 1,2-, 1,3- und 1,4-Cyclohexylen.

Als Aralkyl- sowie als Aralkenylenreste kommen in Frage solche mit 7 bis 20 Kohlenstoffatomen, bevorzugt mit 7 bis 12 Kohlenstoffatomen, besonders bevorzugt solche mit 7 bis 9 Kohlenstoffatomen. Genannt seien: Benzyl, $\alpha$-Methylbenzyl, $\alpha,\alpha$-Dimethylbenzyl, 4-Methylbenzyl, tert.Butylbenzyl, Methoxybenzyl, 3-Chlorbenzyl, Phenethyl, Benzylen, 1,2-, 1,3- und 1,4-Xylylen, bevorzugt Benzyl und Xylylen.

Als Polyaralkylenreste kommen solche mit 7 bis 18 Kohlenstoffatomen in Frage, bevorzugt solche mit 7 bis 12 Kohlenstoffatomen, besonders bevorzugt solche mit 7 bis 9 Kohlenstoffatomen. Die Polyaralkylenreste besitzen im allgemeinen 2 bis 50 Aralkyleneinheiten, bevorzugt 2 bis 30 Aralkyleneinheiten, besonders bevorzugt 2 bis 12 Aralkyleneinheiten.

In einer bevorzugten Ausführungsform bedeuten

m 0

$R^1$ und $R^2$ gleich oder verschieden, gegebenenfalls substituiertes Aralkyl,

$R^5$ und $R^6$ Wasserstoff

X Wasserstoff

n 1 oder 2

$R^4$ $C_1$-$C_4$-Alkyl, insbesondere $CH_3$

Der ganz bevorzugte erfindungsgemäße Beschleuniger ist Methyldibenzylamin (MDBA).

In einer anderen bevorzugten Ausführungsform bedeuten

m 1 bis 5,

A Ethylen,

$R^1$ bis $R^4$ gleich oder verschieden, gegebenenfalls substituiertes Aralkyl, insbesondere Benzyl.

Als Substituenten der oben angegebenen Reste kommen in Frage: Halogen, bevorzugt Chlor, Niederalkyl, Niederalkoxy, Niederalkylthio- und Niederalkyloxycarbonyl.

Die Herstellung der erfindungsgemäßen polyaralkylierten Amine ist beispielsweise in der DE-A-3 730 475 beschrieben.

Als mehrfach aralkylierte Amine, die sich als moderierte Beschleuniger für die Reaktionsharzmassen gemäß der Erfindung eignen, sind im einzelnen folgende beispielhaft zu nennen:

Dibenzyl-methylamin-, -ethylamin-, -propylamin-, -(iso)butylamin-, -hexylamin-, -ethylhexylamin, -dodecylamin, -stearylamin-, -allylamin-, -cyclohexylamin- und -phenethylamin, Tribenzylamin, Di-(p-methylbenzyl)-, Di-($\alpha$-methylbenzyl)-, Di-(methoxybenzyl)-methylamin- und -butylamin, Tetrabenzyl-methylen-diamin, -ethylendiamin, -propylendiamin, -propylidendiamin, -butylendiamin, -butylidendiamin, -hexamethylendiamin, -octamethylendiamin, -cyclohexylen-1,4-diamin, -cyclohexylidendiamin, -isophorondiamin und -xylylendiamin, Pentabenzyl-diethylentriamin und -dipropylentriamin, Hexabenzyl-triethylentetramin, Tripropylentetramin und -N,N′-bis(aminopropyl)ethylendiamin, Heptabenzyl-tetraethylenpentamin, Octabenzylpentaethylenhexamin, Nonabenzylhexaethylenheptamin, Decabenzylheptaethylenoctamin, N-Benzyl-N-(dibenzyl)-, N-(Tribenzyl)-N-(pentabenzyl)- und N-(Pentabenzyl)-N-(heptabenzyl)-methyl-, -butyl-, -allyl-und -cyclohexylamin, N-Benzyl-N-(tribenzyl)-N′-(tetrabenzyl)-N′-(hexabenzyl)-ethylendiamin, -propylendiamin, -butylendiamin, -isophorondiamin und -xylylendiamin, N-Benzyl-N-(tribenzyl)-N′-benzyl-N″-(tetrabenzyl)-N″-(hexabenzyl)-diethylentriamin, N,N′,N″-Tribenzyl-N-dibenzyl)-N″- dodecabenzyl)-dipropylentriamin, N,N,N′,N″,N‴Pentabenzyl-N‴(octabenzyl)-triethylentetramin, N,N′,N″,N‴Tetrabenzyl-N-(dibenzyl)-N⁗-(tetrabenzyl)-N⁗-(dodecabenzyl)-tetraethylenpentamin, N,N,N′,N″,N‴N⁗, N⁗′-Heptabenzyl-N⁗′-(octadecylbenzyl)-pentaethylenhexamin sowie Mischungen derselben.

Die erfindungsgemäßen Reaktionsharze eignen sich hervorragend zur Herstellung von Isolierungen elektrischer Geräte, insbesondere von Wickelungsstäben oder Spulen elektrischer Maschinen und zur Herstellung von Formstoffen mit oder ohne Einlagen, Füllstoffen, Farbstoffen gegebenenfalls weiteren Hilfs- und Zusatzstoffen. Bei Umsetzung von Reaktionsharzgemischen aus vorzugsweise lagerstabilen Mischungen aus Polyisocyanaten und (Poly)-Epoxidverbindungen und Verbindungen c) tritt bei Raumtemperatur die Härtung der Mischungen - in einem für den technischen Einsatz vorzüglich geeigneten Zeitraum - ein.

Die erfindungsgemäß zu verwendenden Amine der Formel (I) lassen sich in die Reaktionsharzmischungen aus Polyisocyanaten und (Poly)-Epoxiden vorzüglich einarbeiten, sie weisen keinen unangenehmen Geruch auf und ermöglichen dem Anwender einen Verarbeitungsspielraum (Topfzeit) von 2 bis 4 Stunden.

Die Amine I werden im allgemeinen in einer Menge von 0,01 bis 10, vorzugsweise von 0,5 bis 5 Gew.-% des Amins bezogen auf die Polyisocyanat/Polyepoxidharzmischung verwendet.

Die z.B. mit Methyl-dibenzylamin oder mit Heptabenzyltetraethylenpentamin hergestellten Formstoffe - sowohl ungefüllt als auch gefüllt - zeichnen sich durch ein vorzügliches Werteniveau aus. Unter gefüllten Formstoffen werden derartige verstanden, die aus den erfindungsgemäßen Harzen und handelsüblichen Füllstoffen, wie z. B. Quarzmehl, Glimmer, Aluminiumoxid oder Glasfasern bzw. Glasgewebe bestehen.

Trotz langer Verarbeitungszeit wird das anschließende Verfestigen des Reaktivharzsystems mit der bevorzugten Katalysatormenge von 3 - 6 Gew-% innerhalb einer Zeit von weniger als 120 Minuten erreicht (Beispiel 2, Tabelle 1).

Danach können die getränkten oder gegossenen Objekte in jeder beliebigen Lage zur endgültigen Aushärtung in Öfen gebracht werden, ohne daß ein Ausfließen der eingedrungenen Reaktionsharzmischung zu befürchten ist. Ausgehärtet ergibt diese Reaktionsharzmischung eine Isolierung bzw. Formstoffe hoher Wärmeformbeständigkeit und hoher Dauerwärmebeständigkeit, die bei hohen Betriebstemperaturen wie z.B. bei der Isolierstoffklasse H vorgeschrieben sind, eingeführt werden können.

Es ist als äußerst überraschend anzusehen, daß die erfindungsgemäßen mehrfach aralkylierten Amine der allgemeinen Formel (I) diese für den Anwender so wichtige Eigenschaft der guten Verarbeitungszeit (Topfzeit) verbunden mit einer bei Raumtemperatur erfolgenden Härtungsreaktion aufweisen, wo doch allgemein bekannt war, daß nur einfach benzylierte tertiäre Amine als Beschleuniger bei Raumtemperatur Verarbeitungszeiten von lediglich 15 bis 25 Minuten aufweisen (vgl. DE-A 36 00 764).

Diese besondere Eigenschaft der erfindungsgemäßen Beschleuniger, die chemisch ebenfalls tert. Amine darstellen, war für den Fachmann nicht vorhersehbar.

Gemessen an dem Stand der Technik liefert die Erfindung stark verbesserte moderierte Beschleuniger, die in vielfältiger Weise den Wünschen und Anforderungen des Verarbeiters in bezug auf das Eigenschaftsbild der verwendeten Reaktionsharzmassen angepaßt werden kann.

Bevorzugte lagerstabile Reaktionsharzmischungen haben eine Viskosität von 20 bis 20 000 mPa.s bei 25 °C.

Gegenstand der vorliegenden Erfindung ist auch die Verwendung der erfindungsgemäßen Mehrkomponenten-Reaktivharz-Mischungen als Ausgangskomponenten zur Herstellung von Formkörpern, Elektroisolierstoffen, Beschichtungen, Verklebungen und Schaumstoffen.

Bei der Ausgangskomponente a) handelt es sich um beliebige organische Polyisocyanate der aus der Polyurethanchemie an sich bekannten Art. Geeignet sind beispielsweise aliphatische, cycloaliphatische,araliphatische, aromatische und heteroaromatische Polyisocyanate, wie sie z.B. von W. Siefken in Justus Liebigs Annalen der Chemie, 562, Seiten 75 bis 136, beschrieben werden, beispielsweise solche der Formel

$$Q\ (NCO)_n,$$

in der

n = 2-4, vorzugsweise 2,

und

Q einen aliphatischen Kohlenwasserstoffrest mit 2-18, vorzugsweise 6-10 C-Atomen,

einen cycloaliphatischen Kohlenwasserstoffrest mit 4-15, vorzugsweise 5-10 C-Atomen,

einen aromatischen Kohlenwasserstoffrest mit 6-15, vorzugsweise 6-13 C-Atomen,

oder einen araliphatischen Kohlenwasserstoffrest mit 8-15, vorzugsweise 8-13 C-Atomen,

bedeuten, z.B. Ethylen-diisocyanat, 1,4-Tetramethylen-diisocyanat, 1,6-Hexamethylendiisocyanat, 1,12-Dodecandiisocyanat, Cyclobutan-1,3-diisocyanat, Cyclohexan-1,3-und -1,4-diisocyanat sowie beliebige Gemische dieser Isomeren, 1-Isocyanato-3,3,5-trimethyl-5-isocyanato-methyl-cyclohexan (DE-Auslegeschrift 1 202 785, US-Patentschrift 3 401 190), 2,4- und 2,6-Hexahydrotoluylendiisocyanat sowie beliebige Gemische dieser Isomeren, Hexahydro-1,3-und/oder -1,4-phenylendiisocyanat, Perhydro-2,4'- und/oder -4,4'-diphenylmethandiisocyanat, 1,3- und 1,4-Phenylendiisocyanat, 2,4- und 2,6-Toluylendiisocyanat sowie beliebige Gemische dieser Isomeren, Diphenylmethan-2,4'-und/oder -4,4'-diisocyanat, Naphthylen-1,5-diisocyanat.

Ferner kommen beispielsweise erfindungsgemäß in Frage: Triphenylmethan-4,4',4''-triisocyanat, Polyphenyl-polymethylenpolyisocyanate, wie sie durch Anilin-Formaldehyd-Kondensation und anschließende Phosgenierung erhalten werden (GB 874 430 und GB 848 671), m- und p-Isocyanatophenylsulfonylisocyanate (US 3 454 606), perchlorierte Arylpolyisocyanate, (US 3 277 138), Carbodiimidgruppen aufweisende Polyisocyanate (US 3 152 162), Norbornan-Diisocyanate (US 3 492 330), Allophanatgruppen aufweisende Polyisocyanate, (GB 994 890), Isocyanuratgruppen aufweisende Polyisocyanate, (US 3 001 973), Urethangruppen aufweisende Polyisocyanate, (US 3 394 164 und 3 644 457), acylierte Harnstoffgruppen aufweisende Polyisocyanate (DE- PS 1 230 778), Biuretgruppen aufweisende Polyisocyanate, (US 3 124 605, 3 201 372 und 3 124 605), durch Telomerisationsreaktionen hergestellte Polyisocyanate (US 3 654 106), Estergruppen aufweisende Polyisocyanate, (US 3 567 763), Umsetzungsprodukte der obengenannten Isocyanate mit Acetalen (DE-PS 1 072 385) und polymere Fettsäureester enthaltende Polyisocyanate (US 3 455 883).

Es ist auch möglich, die bei der technischen Isocyanatherstellung anfallenden, Isocyanatgruppen aufweisenden Destillationsrückstände, gegebenenfalls gelöst in einem oder mehreren der vorgenannten Polyisocyanate, einzusetzen. Ferner ist es möglich, beliebige Mischungen der vorgenannten Polyisocyanate zu verwenden.

Bevorzugt werden in der Regel die technisch leicht zugänglichen Polyisocyanate, z.B. das 2,4- und 2,6-Toluylendiisocyanat sowie beliebige Gemische dieser Isomeren ("TDI"), insbesondere Polyphenyl-polymethylenpolyisocyanate, wie sie durch Anilin-Formaldehyd-Kondensation und anschließende Phosgenierung hergestellt werden ("rohes MDI") und Carbodiimidgruppen, Urethangruppen, Allophanatgruppen, Isocyanuratgruppen, Harnstoffgruppen oder Biuretgruppen aufweisende Polyisocyanate ("modifizierte Polyisocyanate"), insbesondere solche modifizierten Polyisocyanate, die sich vom 2,4-und/oder 2,6-Toluylendiisocyanat bzw. vom 4,4'-und/oder 2,4'-Diphenyl-methandiisocyanat ableiten.

Besonders bevorzugt ist die Verwendung eines Isomeren- und/oder Homologengemisches von Polyisocyanaten der Diphenylmethan-Reihe mit einem Gehalt an 2,4'-Diisocyanatodiphenylmethan von mehr als 20 Gew.-%.

Es handelt sich hierbei um Polyisocyanatgemische der Diphenylmethanreihe mit einem Gehalt an 2,4'-Diisocyanatodiphenylmethan von mehr als 20 Gew.-% vorzugsweise von 30 bis 70 Gew.-%. Neben diesen 2,4'-Isomeren enthält die besonders bevorzugte Polyisocyanat-Komponente im allgemeinen weitere isomere bzw. homologe Polyisocyanate der Diphenylmethanreihe. Dies bedeutet, daß es sich bei der besonders bevorzugten Polyisocyanat-Komponente im allgemeinen entweder um Gemische aus 2,4'-Diisocyanatodiphenylmethan mit 4,4'-Diisocyanatodiphenylmethan und gegebenenfalls 0 bis 20 Gew.-%, bezogen auf das Gesamtgemisch an 2,2'-Diisocyanat-diphenylmethan, oder aber um Gemische dieser Isomeren mit höherkernigen Polyphenyl-polymethylen-polyisocyanaten handelt. In den letztgenannten Gemischen liegt im allgemeinen ein Gehalt von 10 bis zu 60 Gew.-% bezogen auf Gesamtgemisch an derartigen höherkernigen Polyisocyanaten vor. Das erstgenannte als bevorzugt einzusetzende Polyisocyanat-Komponente geeignete an 2,4'-Isomeren angereicherte Diisocyanatgemisch kann beispielsweise durch Abdestillieren eines Diisocyanatgemischs der angegebenen Zusammensetzung aus einem Polyisocyanat-Gemisch erhalten werden, wie es durch Phosgenierung von Anilin/Formaldehyd-Kondensaten entsteht. Das ebenfalls besonders bevorzugt geeignete, höherkernige Polyisocyanate enthaltende Gemisch kann beispielsweise durch Rückvermischen des zuletzt genannten Destillationsproduktes mit an 4,4'-Diisocyanatodiphenylmethan verarmten Phosgenierungsprodukt beispielsweise gemäß DE-AS 1 923 214 erhalten werden. Es ist auch möglich, ein derartiges Gemisch, d.h. ein Polyisocyanatgemisch, dessen Gehalt an 2,4'-Diisocyanatodiphenylmethan den gemachten Angaben entspricht, direkt durch entsprechende Steuerung der Anilin/Formaldehyd-Kondensation zu erhalten. Die US-PS 3 277 173 beschreibt beispielsweise einen Weg zu Polyamingemischen der Diphenylmethanreihe mit einem hohen Gehalt an 2,4'-Diaminodiphenylmethan. Durch Phosgenierung dieser an 2,4'-Diaminodiphenylmethan reichen Kondensate können dann direkt die besonders bevorzugt einsetzbaren Polyisocyanate erhalten werden. Auch in der DT-OS 1 937 685 sowie in der US-PS 3 362 979 werden Wege zu derartigen Polyisocyanatgemischen gewiesen. Auch in den besonders bevorzugt geeigneten Polyisocyanatgemischen, welche höherkernige Polyisocyanate der Diphenylmethanreihe enthalten, liegt der Gehalt an 2,4'-Diisocyanatodiphenylmethan oberhalb 20 Gew.-% bezogen auf Gesamtgemisch.

Es können aber auch zusätzlich Monoisocyanate wie z.B. Stearylisocyanat, vorzugsweise in Mengen bis zu 10 Gew.-% bezogen auf die Mischung aus a) und b) mitverwendet werden.

Bei der Komponente b) handelt es sich um beliebige, mindestens zwei Epoxidgruppen, d.h. vorzugsweise 1,2-Epoxidgruppen aufweisende aliphatische, cycloaliphatische, aromatische oder heterocyclische Verbindungen. Die bevorzugten als Komponente b) geeigneten Polyepoxide weisen pro Molekül 2 bis 4, vorzugsweise 2 Epoxidgruppen und ein Epoxidäquivalentgewicht von 90 bis 500, vorzugsweise 170 bis 220 auf.

Geeignete Polyepoxide sind beispielsweise Polyglycidylether mehrwertiger Phenole, beispielsweise von Brenzkatechin, Resorcin, Hydrochinon, 4,4′-Dihydroxydiphenylmethan, von 4,4′-Dihydroxy-3,3′-dimethyldiphenylmethan, von 4,4′-Dihydroxydiphenylmethan, 4,4′-Dihydroxydiphenylcyclohexan, von 4,4′-Dihydroxy-3,3′-dimethyldiphenylpropan, von 4,4′-Dihydroxydiphenyl, aus 4,4′-Dihydroxydiphenylsulfon, von Tris-(4-hydroxyphenyl)methan, den Chlorierungs- und Bromierungsprodukten der vorstehend genannten Diphenole, von Novolacken (d.h. aus Umsetzungsprodukten von ein- oder mehrwertigen Phenolen mit Aldehyden, insbesondere Formaldehyd, in Gegenwart saurer Katalysatoren), von Diphenolen, die durch Veresterung von 2 Mol des Natriumsalzes einer aromatischen Oxycarbonsäure mit einem Mol eines Dihalogenalkans oder Dihalogendialkylethers erhalten wurden (vgl. britisches Patent 1 017 612) oder von Polyphenolen, die durch Kondensation von Phenolen und langkettigen, mindestens zwei Halogenatome enthaltenden Halogenparaffinen erhalten wurden (vgl. GB-PS 1 024 288). Weiterhin seien genannt: Polyepoxidverbindungen auf der Basis von aromatischen Aminen und Epichlorhydrin, z.B. N-Di-(2,3-epoxypropyl)anilin, N,N′-Dimethyl-N,N′-diepoxypropyl-4,4′-diaminodiphenylmethan, N-Diepoxypropyl-4-amino-phenylglycidether (vgl. GB-PS 772 830 und 816 923).

Außerdem kommen in Frage: Glycidylester mehrwertiger aromatischer, aliphatischer und cycloaliphatischer Carbonsäuren, beispielsweise Phthalsäurediglycidylester, Adipinsäurediglycidylester und Glycidylester von Umsetzungsprodukten aus 1 Mol eines aromatischen oder cycloaliphatischen Dicarbonsäureanhydrids und 1/2 Mol eines Diols bzw. 1/n Mol eines Polyols mit n Hydroxygruppen oder Hexahydrophthalsäurediglycidylester, die gegebenenfalls mit Methylgruppen substituiert sein können.

Glycidylether mehrwertiger Alkohole, beispielsweise von 1,4-Butandiol, 1,4-Butendiol, Glycerin, Trimethylolpropan, Pentaerythrit und Polyethylenglykolen können ebenfalls verwendet werden. Von weiterem Interesse sind Triglycidylisocyanurat, N,N′-Diepoxypropyloxamid, Polyglycidylthioether aus mehrwertigen Thiolen, wie beispielsweise aus Bismercaptomethylbenzol, Diglycidyltrimethylentrisulfon, Polyglycidylether auf Basis von Hydantoinen.

Schließlich seien Epoxidierungsprodukte von mehrfach ungesättigten Verbindungen genannt, wie vegetabilischen Ölen und deren Umwandlungsprodukten, Epoxidierungsprodukte von Di- und Polyolefinen, wie Butadien, Vinylcyclohexen, 1,5-Cyclooctadien, 1,5,9-Cyclododecatrien, Polymerisaten und Mischpolymerisaten, die noch epoxidierbare Doppelbindungen enthalten, z.B. auf Basis von Polybutadien, Polyisopren, Butadien-Styrol-Mischpolymerisaten, Divinylbenzol, Dicyclopentadien, ungesättigten Polyestern, ferner Epoxidierungsprodukte aus Olefinen, welche durch Diels-Alder-Addition zugänglich sind und anschließend durch Epoxidierung mit Perverbindung in Polyepoxide überführt werden oder aus Verbindungen, die zwei Cyclopenten- oder Cyclohexenringe über Brückenatome- oder Brückenatomgruppen verknüpft enthalten. Außerdem seien Polymerisate von ungesättigten Monoepoxiden genannt, beispielsweise aus Methacrylsäureglycidylester oder Allylglycidylether.

Vorzugsweise werden erfindungsgemäß folgende Polyepoxidverbindungen oder deren Mischungen als Komponente b) verwendet:

Polyglycidylether mehrwertiger Phenole, insbesondere von Bisphenol A; Polyepoxidverbindungen auf der Basis von aromatischen Aminen, insbesondere Bis(N-epoxypropyl)anilin, N,N′-Dimethyl-N,N′-diepoxypropyl-4,4′-diaminodiphenylmethan und N-Diepoxypropyl-4-amino-phenylglycidylether; Polyglycidylester aus cycloaliphatischen Dicarbonsäuren, insbesondere Hexahydrophthalsäurediglycidylester und Polyepoxide aus dem Umsetzungsprodukt von n Molen Hexahydrophthalsäureanhydrid und 1 Mol eines Polyols mit n Hydroxylgruppen (n = ganze Zahl von 2-6), insbesondere 3 Mol Hexahydrophthalsaüreanhydrid und einem Mol 1,1,1-Trimethylolpropan, 3,4-Epoxycyclohexylmethan-3,4-epoxycyclohexan-carboxylat.

Flüssige Polyepoxide oder niedrigviskose Diepoxide, wie Bis-(N-epoxipropyl)-anilin oder Vinylcyclohexandiepoxid können in besonderen Fällen die Viskosität von bereits flüssigen Polyepoxiden weiter herabsetzen oder feste Polyepoxide in flüssige Mischungen überführen.

Die Komponente b) wird in einer solchen Menge eingesetzt, die einem Äquivalentverhältnis von Isocyanatgruppen zu Epoxidgruppen von 1,2:1 bis 500:1, entspricht.

Das Polyisocyanat a) und das Epoxid b) werden gemäß der deutschen Patentanmeldung DE-A 28 07 660 zu einer lagerstabilen Reaktionsharzmischung kombiniert, wobei diese Mischung erhältlich ist aus

a) mindestens einem organischen Polyisocyanat

b) mindestens einer mindestens zwei Epoxidgruppen aufweisenden organischen Verbindung

c) wenigstens einem die Reaktion von a) und b) inhibierenden Alkylierungsmittel aus der Gruppe der organischen Sulfonsäureester, Methyliodid und/oder Dimethylsulfat und

d) gegebenenfalls weiteren Hilfs- und Zusatzstoffen.

Es ist hierbei bevorzugt, daß das Alkylierungsmittel c) Alkylgruppen mit 1 bis 4 C-Atomen überträgt und in einer Menge von 0,001 bis 1 Gew.-% bezogen auf die Summe aus a) und b) eingesetzt wird.

Insbesondere ist die Komponente c) ein Ester einer organischen Sulfonsäure, Methyliodid oder Dimethylsulfat.

Typische Beispiele von Zusatzmitteln d1) sind olefinisch ungesättigte Monomere, die keine gegenüber NCO-Gruppen reaktive Wasserstoffatome aufweisen, wie z.B Diisobutylen, Styrol, $C_1$-$C_4$-Alkylstyrole, wie $\alpha$-Methylstyrol, $\alpha$-Butylstyrol, Vinylchlorid, Vinylacetat, Maleinimidderivate wie z.B. Bis-(4-maleinimido-phenyl)-methan, Acrylsäure-$C_1$-$C_8$-alkylester wie Acrylsäuremethylester, Acrylsäurebutylester oder Acrylsäureoctylester, die entsprechenden Methacrylsäureester, Acrylnitril oder Diallylphthalat. Beliebige Gemische derartiger olefinisch ungesättigter Monomerer können ebenfalls eingesetzt werden. Vorzugsweise werden Styrol und/oder (Meth)-acrylsäure-$C_1$-$C_4$-alkylester verwendet.

Bei Mitverwendung von Zusatzmitteln d1) ist die Mitverwendung von klassischen Polymerisationsinitiatoren wie z.B. Benzoylperoxid möglich, im allgemeinen jedoch nicht erforderlich.

Weitere, gegebenenfalls mitzuverwendende Hilfs- und Zusatzmittel d) sind

d2) mindestens 2, insbesondere 2 bis 8 und vorzugsweise 2 bis 3 alkoholische Hydroxylgruppen aufweisende organische Verbindungen des Molekulargewichtsbereichs 62 bis 2000, wie sie als Aufbaukomponente für Polyurethane an sich bekannt sind. Beispiele sind einfache mehrwertige Alkohole wie Ethylenglykol, Hexandiol-1,6, Glycerin oder Trimethylolpropan, Dimethylsiloxan-Einheiten aufweisende Polyole, z.B. Bis-(dimethyl-hydroxymethyl-silyl)-ether; Estergruppen aufweisendde Polyhydroxylverbindungen wie z.B. Ricinusöl oder Polyhydroxypolyester wie sie durch Polykondensation überschüssiger Mengen einfacher mehrwertiger Alkohole der soeben beispielhaft genannten Art mit vorzugsweise dibasischen Carbonsäuren bzw. deren Anhydride wie z.B. Adipinsäure, Phthalsäure oder Phthalsäureanhydrid zugänglich sind oder Polyhydroxypolyether wie sie durch Anlagerung von Alkylenoxiden wie Propylenoxid und/oder Ethylenoxid an geeignete Startermoleküle wie z.B. Wasser, die soeben genannten einfachen Alkohole oder auch Amine mit mindestens zwei aminischen NH-Bindungen zugänglich sind.

Die Zusatzmittel d2) werden, falls überhaupt, in einer solchen maximalen Menge mitverwendet, die einem NCO/OH-Äquivalentverhältnis, bezogen auf die Isocyanatgruppen der Komponente a) und die Hydroxylgruppen der Komponente d2), von mindestens 2:1, vorzugsweise mindestens 2,5:1, entspricht. In jedem Fall muß die Menge der Komponente a) so bemessen sein, daß das Äquivalentverhältnis von Isocyanatgruppen der Komponente a) zur Summe der Epoxidgruppen der Komponente b), Hydroxylgruppen der Komponente d2) und den gegebenenfalls in der Komponente b) vorliegenden Hydroxylgruppen mindestens bei 1,2:1, besonders bevorzugt bei 4:1 bis 30:1 liegt.

Die Mitverwendung von Hilfs- und Zusatzmitteln d1) bzw. d2) ist im allgemeinen nicht erforderlich, Die unter d1) beispielhaft genannten Zusatzmittel sind im übrigen gegenüber den unter d2) beispielhaft genannten Verbindungen bevorzugt. Grundsätzlich ist es auch möglich, gleichzeitig beide Arten von Hilfs- und Zusatzmitteln mitzuverwenden.

Weitere, gegebenenfalls mitzuverwendende Hilfs- und Zusatzmittel d) sind beispielsweise Füllstoffe wie z.B. Quarzmehl, Kreide oder Aluminiumoxid; Pigmente wie z.B. Titandioxid, Eisenoxid oder organische Pigmente wie Phthalocyanin-Pigmente; Weichmacher wie z.B. Dioctylphthalat, Tributyl- oder Triphenylphosphat; einbaufähige Verträglichkeitsvermittler wie z.B. Methacrylsäure-ß-hydroxypropylester, Maleinsäure- und Fumarsäureester; lösliche Farbstoffe oder Verstärkungsmaterialien wie z.B. Glasfasern oder Glasgewebe. Ebenfalls geeignet sind C-Fasern bzw. C-Fasergewebe und andere organische Polymerfasern wie z.B. Aramidfasern oder LC-Polymerfasern (LC = "liquid cristal").

Die Hilfs- und Zusatzmittel können sowohl den Ausgangsmaterialien a) und b) vor der Durchführung des erfindungsgemäßen Verfahrens einverleibt oder auch erst später mit dem in der lagerstabilen Form vorliegenden Harz zugemischt werden.

Zur Durchführung des erfindungsgemäßen Verfahrens werden die Ausgangsmaterialien a), b), gegebenenfalls c) und gegebenenfalls die Hilfs- und Zusatzmittel d) bzw. ein Teil hiervon miteinander vermischt, das Beschleunigersystem DBA zugegeben und die verarbeitungsfähige Mischung als Imprägnierharz oder als Gießharz in üblicher Weise angewendet.

Die Aushärtung der Gemische erfolgt in der Regel nach Katalysatorzusatz bei Raumtemperatur.

Die Nachhärtung der gelierten bereits formstabilen Kunststoffe erfolgt in der Regel bei 100 bis 250 °C, vorzugsweise zwischen 150 und 230 °C.

Das erfindungsgemäße Verfahren kann auch zur Herstellung von Tränk- und Imprägnierungsmassen für Elektroisolierungen oder für glasfaserverstärkte Laminate herangezogen werden. Das erfindungsgemäße Verfahren eignet sich zur Herstellung von elektrischen Bauteilen nach dem Gießverfahren. Hierzu gehören beispielsweise gedruckte Schaltungen, elektronische Uhren, Taschenrechner, elektronische Kameras, Computer, Mikrocomputer und digital arbeitende Datenspeicher.

Die Wärmebeständigkeit der erfindungsgemäßen Verfahrensprodukte, die niedrigen dielektrischen Verluste, die Feuchtebeständigkeit und die Abriebfestigkeit sowie die Verarbeitbarkeit in Formen sind hervorragend. Außerdem eignet sich das erfindungsgemäße Verfahren zur Herstellung von Isolierstoffen der Isolierstoffklassen H und C (JEC 85/Publication 84) in elektrischen Motoren und Generatoren, zur Herstellung von Konstruktionswerkstoffen für Flugzeuge, Raketen oder anderen hoch beanspruchten Geräten.

Auch die Herstellung von Isolatoren, Transformatoren, Kondensatoren, Schichtstoffen zur Herstellung von Rohren, Behältern oder Sportgeräten ist möglich. Im Falle der Verarbeitung der Gemische in Kombination mit geeigneten Treibmitteln ist auch die Herstellung von Schaumstoffen denkbar.

In den nachfolgenden Beispielen beziehen sich alle Prozentangaben auf Gewichtsprozente.

## Beispiele

### Beispiel 1

120 Gew.-Teile eines Gemischs aus 60 % 2,4′-Diisocyanatodiphenylmethan und 40 % 4,4′-Diisocyanatodiphenylmethan (NCO-Gehalt = 33,6 %) (MDI) werden mit 30 Gew.-Teilen des Diglycidethers von Bisphenol A (Epoxidzahl = 0,5) und 1,5 ml einer separat hergestellten 1 M Lösung von p-Toluolsulfonsäuremethylester in dem o.g. Diisocyanatgemischs (MDI) gemischt und 30 min unter Stickstoff und Rühren auf 120 °C erhitzt. Nach Abkühlen erhält man ein Reaktivharz I mit folgenden Kenndaten:

100 Gew.-Teile dieser lagerstabilen Reaktionsharzmischung werden mit 3 Gew.-Teilen Methyl-dibenzylamin vermischt, unter Rühren im Vakuum entgast und die Topfzeit bei RT ermittelt. Sie beträgt ca. 4 Std.

Nach Festwerden der Kunststoffmasse und nachfolgender Temperung (je 4 Std. bei 80 °C, 120 °C, 160 °C und 250 °C) werden die mechanischen Festigkeiten der Kunststoffmasse ermittelt.

| | |
|---|---|
| Zugfestigkeit ($N/mm^2$): | 58,1 |
| Dehnung (%): | 1,6 |
| E-Modul ($N/mm^2$): | 3312 |
| Biegefestigkeit ($N/mm^2$): | 83,2 |
| Randfaserdehnung (%): | 2,4 |
| Kugeldruckhärte ($N/mm^2$): | 235,4 |
| Schlagzähigkeit ($kJ/m^2$): | 11,2 |
| Wärmeformbeständigkeit nach Martens (°C): | >240 |

### Beispiel 2

Gebrauchsdauerprüfung an den erfindungsgemäßen Reaktionsharzmassen durch den Viskositätsaufbau bei Raumtemperatur (mPa.s).

Ansatz: Jeweils 100 Gew.-Teile eines lagerstabilen Reaktionsharzes das gemäß der DE-A-36 44 382 aus den folgenden Ausgangskomponenten hergestellt wurde:

800 Gew.-Teile eines Gemischs aus 60 % 2,4′-Diisocyanatodiphenylmethan und 40 % 4,4′-Diisocyanatodiphenylmethan werden bei 50 °C mit 200 Gew.-Teilen des Diglycidylethers von Bisphenol A (Epoxidzahl = 0,585) und 0,5 ml Dimethylbenzylamin gemischt und anschließend auf 120 °C aufgeheizt. Man verfährt weiter wie in Beispiel 1 der DE-A-36 44 382 beschrieben unter Zugabe von 6,5 ml einer 15,4 gew.-%igen Lösung von p-Toluolsulfonsäuremethylester und 596 Gew.-Teilen der Isocyanatmischung.

Es entsteht ein klares, gelbes, lagerstabiles Harz mit einer Viskosität von 3600 mPa.s bei 23 °C und einem NCO-Gehalt von 21 %.

Anteile dieses so entstandenen Harzes werden anschließend mit verschiedenen Gew.-Teilen an erfindungsgemäßem Katalysator versetzt und der Viskositätsaufbau bei Raumtemperatur ermittelt, siehe Tabelle 1.

**Tabelle 1** Viskositätsaufbau bei Raumtemperatur (mPa.s 23°C)

| Versuch Nr. | Gew.-Teile MBDA auf 100 Gew.-Teile Harz | Sofortwert | nach 2 h | nach 4 h | nach 6 h | nach 8 h |
|---|---|---|---|---|---|---|
| 2.1 | 0,5 | 3600 | 3600 | 3600 | 3700 | 9300 |
| 2.2 | 1,0 | 3700 | 3700 | 3700 | fest | - |
| 2.3 | 2,0 | 3400 | 3400 | fest | - | - |
| 2.4 | 3,0 | 2900 | 3800 | fest | - | - |
| 2.5 | 5,0 | 2300 | 13600 | fest | - | - |
| 2.6 | 10,0 | 1600 | fest | - | - | - |

**Tabelle 2** Mechanische Werte an ungefüllten Formstoffen, abhängig von Katalysatormenge

| | | | | |
|---|---|---|---|---|
| Versuchs-Nr. aus Tab. 1 | | 2.1 | 2.5 | 2.6 |
| | | A | B | C |
| Anhärtung: | | jeweils 4 h bis 80° C/120° C/160° C | | |
| Nachhärtung | | jeweils 16 h bis 260° C | | |
| Mech. Werte: | | | | |
| Zugfestigkeit | [$N/mm^2$] | 45,5 | 44,7 | 63,7 |
| Dehnung | [%] | 1,5 | 1,3 | 2,0 |
| E-Modul | [$N/mm^2$] | 3231 | 3393 | 3560 |
| Biegefestigkeit | [$N/mm^2$] | 121,1 | 131,4 | 123,7 |
| RFD (%) | | 4,1 | 4,2 | 3,6 |
| Kugeldruckhärte | [$N/mm^2$] | 235,9 | 244 | 248 |
| Schlagzähigkeit | [$kJ/m^2$] | 15,8 | 14,8 | 14,8 |
| Wärmeformbeständigkeit nach Martens (°C) | | >250 | >250 | >250 |

**Tabelle 3** Mechanische Werte an ungefüllten und gefüllten Formstoffen

| Versuchs-Nr. aus Tab. 1 | | 2.4 | 2.4 | 2.5 + 150 Gew.-Tle Quarzmehl, Typ W 12 | |
|---|---|---|---|---|---|
| Anhärtung: | | D | E | F | G |
| | | jeweils 4 h bis $80^0 C/120^0 C/160^0 C$ | | | |
| Nachhärtung: | | 16 h - $200^0 C$ | 16 h - $250^0 C$ | 16 h - $200^0 C$ | 16 h - $250^0 C$ |
| Mech. Werte: | | | | | |
| Zugfestigkeit | [$N/mm^2$] | 57,1 | 66,7 | 72,0 | 66,8 |
| Dehnung | [%] | 1,9 | 2,5 | 0,8 | 0,9 |
| E-Modul | [$N/mm^2$] | 3410 | 3286 | 10520 | 8296 |
| Biegefestigkeit | [$N/mm^2$] | 117,7 | 123,7 | 109,6 | 117,3 |
| RFD (%) | | 3,59 | 4,04 | 1,16 | 1,61 |
| Kugeldruckhärte | [$N/mm^2$] | 247,0 | 228,5 | 459,7 | 391,3 |
| Schlagzähigkeit | [$kJ/m^2$] | 13,0 | 15,4 | 6,4 | 8,5 |
| Wärmeformbeständigkeit nach Martens ($^0 C$) | | 249 | 249 | >250 | >250 |

Vergleichsbeispiel

Um die überraschende Wirkung der erfindungsgemäßen Substanzen gegenüber dem als Katalysator bekannten Dimethylbenzylamin zu demonstrieren wurde folgender Vergleichsversuch durchgeführt:

100 Gew.-Teile der lagerstabilen Reaktionsharzmischung aus Beispiel 1 werden mit 1 Gew.-Teil Dimethylbenzylamin unter Rühren vermischt und sofort unter Temperaturkontrolle beobachtet. Nach 7 Minuten beginnt die exotherme Reaktion, nach insgesamt 12 Minuten ist die Reaktionstemperatur auf 110 °C angestiegen, das Harz geliert (DIN 16 945) und ist nach 13 Minuten fest.

Beispiel 4

Gebrauchsdauerprüfung an den erfindungsgemäßen Reaktionsharzmassen durch den Viskositätsaufbau bei Raumtemperatur (mPa.s).

Ansatz: Jeweils 100 Gew.-Teile eines lagerstabilen Reaktionsharzes das gemäß der DE-A-36 44 382 aus den folgenden Ausgangskomponenten hergestellt wurde:
800 Gew.-Teile eines Gemischs aus 60 % 2,4′-Diisocyanatodiphenylmethan und 40 % 4,4′-Diisocyanatodiphenylmethan werden bei 50 °C mit 200 Gew.-Teilen des Diglycidylethers von Bisphenol A (Epoxidzahl = 0,585) und 0,5 ml Dimethylbenzylamin gemischt und anschließend auf 120 °C aufgeheizt und dann auf 90 °C abgekühlt. Die Reaktion wird gestoppt durch die Zugabe von 6,5 ml einer 15,4 gew.-%igen Lösung von p-Toluolsulfonsäuremethylester der oben angegebenen Diisocyanatmischung. Weitere 596 Gew.-Teile der oben angegebenen Isocyanatzusammensetzung und oben angegebener Diglycidylether werden zu der Reaktionsmischung gegeben. Die erhaltene Mischung wird dann bei 120 °C gerührt bis eine klare homogene Lösung erhalten ist.

Es entsteht ein klares gelbes lagerstabiles Harz.

Unterschiedliche Menge von Heptabenzyltetraethylenpentamin (HBTPA) der Formel

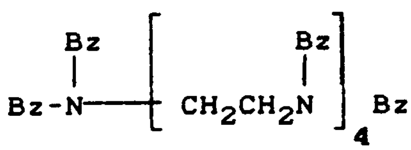

mit Bz = Benzyl
werden zugesetzt. Die Zunahme der Viskosität bei Raumtemperatur wird bestimmt. Die Ergebnisse werden in Tabelle 6 angegebenen.

Die mechanischen Eigenschaften werden in Tabelle 7 angegeben.

**Tabelle 6**

Viskositätsaufbau bei Raumtemperatur - Angaben in (mPa.s)

**Ansatz:** 100 G. T. Reaktionsharz
X G. T. HBTPA

| Gewichts-teile HBTPA | Sofort-wert | nach 2 h | nach 4 h | nach 6 h | nach 8 h | nach 24 h | nach 28 h | nach 30 h | nach 32 h | nach 48 h |
|---|---|---|---|---|---|---|---|---|---|---|
| 0,5 | 2.200 | 2.200 | 2.300 | 2.300 | 2.600 | 3.500 | 10.000 | 13.000 | 17.200 | >60.000 |
| 1,0 | 2.200 | 2.200 | 2.200 | 2.300 | 2.600 | 24.000 | >60.000 | fest | - | - |
| 2,0 | 2.200 | 2.200 | 2.200 | 2.400 | 2.600 | >60.000 | fest | - | - | - |
| 3,0 | 2.200 | 2.200 | 2.300 | 2.400 | 2.800 | >60.000 | fest | - | - | - |
| 5,0 | 2.200 | 2.200 | 2.500 | 2.600 | 3.000 | >60.000 | fest | - | - | - |
| 10,0 | 2.300 | 2.400 | 2.800 | 3.000 | 3.400 | >60.000 | fest | - | - | - |

G. T. = Gewichtsteile

h = Stunden

**Tabelle 7**

Mechanische Werte

| Ansatz: | 100 G. T. Reaktionsharz<br>3 G. T. HBTPA | | 100 G. T. Reaktionsharz<br>3 G. T. HBTPA<br>150 G. T. Quarzmehl W 12, getr. | |
|---|---|---|---|---|
| Anhärtung: | jeweils 4 h - 80° C / 120° C / 160° C | | | |
| Nachhärtung: | 16 Std. - 200° C | 16 Std. - 250° C | 16 Std. - 200° C | 16 Std. - 250° C |
| Zugfestigkeit ($N/mm^2$) | 61 | 41 | 78 | 77 |
| Dehnung (%) | 1,8 | 1,4 | 0,3 | 0,9 |
| E-Modul ($N/mm^2$) | 3.510 | 3.230 | 15.800 | 10.200 |
| Biegefestigkeit ($N/mm^2$) | 109 | 121 | 130 | 115 |
| Randfaserdehnung (%) | 2,8 | 3,7 | 1,3 | 1,3 |
| Schlagzähigkeit ($KJ/m^2$) | 10 | 13 | 5 | 5 |
| Kugeldruckhärte ($N/mm^2$) | 251 | 235 | 450 | 450 |
| Wärmeformbeständigkeit nach Martens (° C) | 220 | >250 | >250 | >250 |

## Patentansprüche

1. Bei Raumtemperatur härtende, flüssige Reaktionsharzmischungen enthaltend wenigstens ein Polyisocyanat a) und wenigstens ein Polyepoxid b), deren Äquivalenzverhältnis von Isocyanat zu Epoxidgruppen

von 1,2.1 bis 500:1 entspricht, erhältlich aus

a) mindestens einem organischen Polyisocyanat

b) mindestens einer mindestens zwei Epoxidgruppen aufweisenden organischen Verbindung

c) einen Ester einer organischen Sulfonsäure, Methyliodid und/oder Dimethylsulfat und

d) gegebenenfalls weiteren Hilfs- und Zusatzstoffen

dadurch gekennzeichnet, daß die Mischungen wenigstens ein Amin folgender Struktur I in einer Menge von 0,01-10 Gew.-% bezogen auf Polyisocyanat/Polyepoxidharzmischung aufweisen

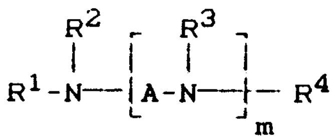

(I)

in der bedeuten

| | |
|---|---|
| A | gleich oder verschieden, verzweigtes oder unverzweigtes, gegebenenfalls substituiertes $C_{1-20}$-Alkylen, $C_{2-20}$-Alkenylen, $C_{2-20}$-Alkinylen, $C_{2-20}$-Alkyliden, $C_{3-12}$-Cycloalkylen-, $C_{7-20}$-Aralkenylen, wobei als Substituenten dieses und der folgenden Reste Halogen, Niederalkyl, Niederalkoxy, Niederalkylthio und Niederakyloxycarbonyl in Frage kommen, |
| m | eine ganze Zahl von 0 bis 30, |
| $R^1$, $R^2$ und $R^3$ | gleich oder verschieden, gegebenenfalls substituiertes Aralkyl- oder Polyaralkyl der allgemeinen Formel II, |

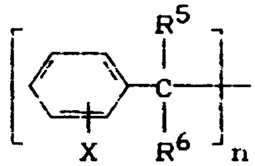

(II)

in der bedeuten

| | |
|---|---|
| $R^5$ und $R^6$ | gleich oder verschieden, Wasserstoff oder Niederalkyl, |
| X | für Wasserstoff, Niederalkyl, Niederalkoxy, Niederalkoxycarbonyl oder Halogen und |
| n | eine ganze Zahl von 1 bis 50 und |
| $R^4$ | verzweigtes oder unverzweigtes, gegebenenfalls substituiertes $C_{1-20}$-Alkyl, Alkenyl oder Alkinyl, $C_{3-12}$-Cycloalkyl oder einen der unter $R^1$ bis $R^3$ angegebenen Substituenten. |

**2.** Reaktionsharzmischungen nach Anspruch 1, dadurch gekennzeichnet, daß bedeuten

| | |
|---|---|
| m | O |
| $R^1$ bis $R^2$ | gleich oder verschieden, gegebenenfalls substituiertes Aralkyl |
| $R^5$ und $R^6$ | Wasserstoff |
| X | Wasserstoff |
| n | 1 oder 2 |
| $R^4$ | $C_1$-$C_4$-Alkyl, insbesondere $CH_3$. |

**3.** Reaktionsharzmischungen nach Anspruch 1, dadurch gekennzeichnet, daß als Amin der Formel (I) enthalten sind Methyldibenzylamin, Dibenzylethylamin, Dibenzylbutylamin, Dibenzylcyclohexylamin, Dibenzylstearylamin, Tetrabenzylethylendiamin, Tetrabenzylpropylendiamin, Pentabenzyldiethylentriamin, Hexabenzyltriethylentetramin, Heptabenzyltetraethylenpentamin oder Octabenzylpentaethylenhexamin oder deren Gemische.

**4.** Reaktionsharzmischung nach Anspruch 1, dadurch gekennzeichnet, daß als Polyisocyanat a) ein Diisocyanatodiphenylmethan enthalten ist.

**5.** Reaktionsharzmischung nach Anspruch 1, dadurch gekennzeichnet, daß als Epoxid b) ein Diglycidether von Bisphenol A enthalten ist.

**6.** Reaktionsharzmischung nach Anspruch 1, dadurch gekennzeichnet, daß in der Reaktionsharzmischung 0,5 bis 5 Gew.-% des Amins I, bezogen auf die Polyisocyanat/Polyepoxidharzmischungen enthalten sind.

**7.** Verwendung der Reaktionsharzmischung nach Anspruch 1 zur Imprägnierung von Isolierungen elektrischer Geräte und zur Herstellung von Formkörpern nach dem Gießverfahren und als Ausgangskomponenten zur Herstellung von Beschichtungen, Verklebungen und Schaumstoffen.

**Claims**

**1.** Liquid reactive resin blends which cure at room temperature and comprise at least one polyisocyanate a) and at least one polyepoxide b), the equivalence ratio of isocyanate to epoxide groups being from 1.2:1 to 500:1, which are obtainable from

a) at least one organic polyisocyanate,
b) at least one organic compound containing at least two epoxide groups,
c) an ester of an organic sulphonic acid, methyl iodide and/or dimethyl sulphate and
d) if appropriate other auxiliaries and additives,

characterized in that the blends contain at least one amine of the following structure I in an amount of 0.01-10% by weight, based on the polyisocyanate/polyepoxy resin blend

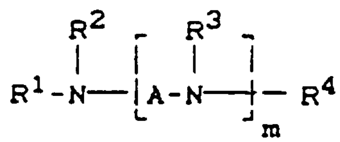

(I)

in which

| | |
|---|---|
| A | is identical or different and denotes branched or unbranched, optionally substituted $C_{1-20}$-alkylene, $C_{2-20}$-alkenylene, $C_{2-20}$-alkinylene, $C_{2-20}$-alkylidene, $C_{3-12}$-cycloalkylene or $C_{7-20}$-aralkenylene, possible substituents of these and the following radicals being halogen, lower alkyl, lower alkoxy, lower alkylthio and lower alkyloxycarbonyl, |
| m | denotes an integer from 0 to 30, |
| $R^1$, $R^2$ and $R^3$ | are identical or different and denote optionally substituted aralkyl or polyaralkyl of the general formula II |

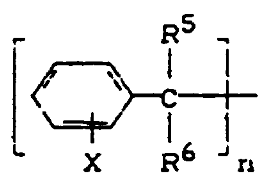

(II)

in which

| | |
|---|---|
| $R^5$ and $R^6$ | are identical or different and denote hydrogen or lower alkyl, |
| X | denotes hydrogen, lower alkyl, lower alkoxy, lower alkoxycarbonyl or halogen and |
| n | denotes an integer from 1 to 50, and |
| $R^4$ | denotes branched or unbranched, optionally substituted $C_{1-20}$-alkyl, alkenyl or alkinyl, $C_{3-12}$-cycloalkyl or one of the substituents mentioned under $R^1$ to $R^3$. |

**2.** Reactive resin blends according to Claim 1, characterized in that

| | |
|---|---|
| m | denotes 0 |
| $R^1$ to $R^2$ | are identical or different and denote optionally substituted aralkyl, |
| $R^5$ and $R^6$ | denote hydrogen, |

X denotes hydrogen,
n denotes 1 or 2, and
$R^4$ denotes $C_1$-$C_4$-alkyl, in particular $CH_3$.

**3.** Reactive resin blends according to Claim 1, characterized in that they comprise, as the amine of the formula (I), methyldibenzylamine, dibenzylethylamine, dibenzylbutylamine, dibenzylcyclohexylamine, dibenzylstearylamine, tetrabenzylethylenediamine, tetrabenzylpropylenediamine, pentabenzyldiethylenetriamine, hexabenzyltriethylenetetramine, heptabenzyltetraethylenepentamine or octabenzylpentaethylenehexamine or mixtures thereof.

**4.** Reactive resin blend according to Claim 1, characterized in that it comprises, as the polyisocyanate a), a diisocyanatodiphenylmethane.

**5.** Reactive resin blend according to Claim 1, characterized in that it comprises, as the epoxide b), a diglycidyl ether of bisphenol A.

**6.** Reactive resin blend according to Claim 1, characterized in that the reactive resin blend comprises 0.5 to 5% by weight of the amine I, based on the polyisocyanate/polyepoxy resin blends.

**7.** Use of the reactive resin blend according to Claim 1 for impregnating insulations of electrical equipment and for the production of shaped articles by the casting process, and as starting components for the production of coatings, adhesive bonds and foams.

## Revendications

**1.** Mélanges résineux réactifs liquides durcissant à température ambiante, contenant au moins un polyisocyanate a) et au moins un polyépoxyde b), avec un rapport de 1,2:1 à 500:1 entre les équivalents de groupes isocyanate et les équivalents de groupes époxyde, obtenus à partir de :
a) au moins un polyisocyanate organique,
b) au moins un composé organique contenant au moins deux groupes époxyde,
c) un ester d'un acide organique sulfonique, l'iodure de méthyle et/ou le sulfate de diméthyle, et
d) le cas échéant d'autres produits auxiliaires et additifs,
caractérisés en ce qu'ils contiennent au moins une amine de structure I ci-après en quantité de 0,01 à 10 % du poids du mélange résineux polyisocyanate/polyépoxyde :

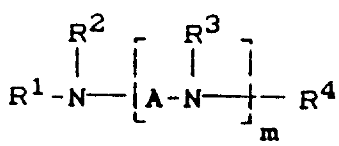

( I )

dans laquelle
les symboles A, ayant des significations identiques ou différentes, représentent chacun un groupe alkylène en $C_1$-$C_{20}$, alcénylène en $C_2$-$C_{20}$, alcynylène en $C_2$-$C_{20}$, alkylidène en $C_2$-$C_{20}$, cycloalkylène en $C_3$-$C_{12}$, aralcénylène en $C_7$-$C_{20}$ à chaîne droite ou ramifiée, éventuellement substitué, les substituants de ces groupes et des autres groupes étant des halogènes, des groupes alkyle inférieurs, alcoxy inférieurs, alkylthio inférieurs et alkoxycarbonyle inférieurs, m est un nombre entier allant de 0 à 30,
$R^1$, $R^2$ et $R^3$, ayant des significations identiques ou différentes, représentent chacun un groupe aralkyle ou polyaralkyle éventuellement substitué de formule générale II :

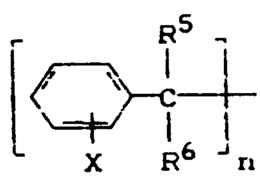

( II )

dans laquelle
$R^5$ et $R^6$, ayant des significations identiques ou différentes, représentent chacun l'hydrogène ou un groupe alkyle inférieur,
X représente l'hydrogène, un groupe alkyle inférieur, alcoxy inférieur, alcoxycarbonyle inférieur ou un halogène, et
n est un nombre entier allant de 1 à 50, et
$R^4$ représente un groupe alkyle, alcényle ou alcynyle en $C_1$-$C_{20}$ à chaîne droite ou ramifiée, éventuellement substitué, un groupe cycloalkyle en $C_3$-$C_{12}$ ou l'un des substituants mentionnés en référence à $R^1$ à $R^3$.

**2.** Mélanges résineux réactifs selon revendication 1, caractérisés en ce que :
m = 0
$R^1$ et $R^2$ représentent des groupes aralkyle identiques ou différents éventuellement substitués,
$R^5$ et $R^6$ représentent l'hydrogène
X représente l'hydrogène
n = 1 ou 2
$R^4$ représente un groupe alkyle en $C_1$-$C_4$, surtout $CH_3$.

**3.** Mélanges résineux réactifs selon revendication 1, caractérisés en ce que l'amine de formule I qu'ils contiennent est la méthylbenzylamine, la dibenzyléthylamine, la dibenzylbutylamine, la dibenzylcyclohexylamine, la dibenzylstéarylamine, la tétrabenzyléthylène-diamine, la tétrabenzyl-propylène-diamine, la pentabenzyldiéthylène-triamine, l'hexabenzyltriéthylène-tétramine, l'heptabenzyltétraéthylène-pentamine ou l'octabenzylpentaéthylène-hexamine ou leurs mélanges.

**4.** Mélange résineux réactif selon revendication 1, caractérisé en ce qu'il contient en tant que polyisocyanate a) un diisocyanatodiphénylméthane.

**5.** Mélange résineux réactif selon revendication 1, caractérisé en ce qu'il contient en tant qu'époxyde b) un éther diglycidylique du bisphénol A.

**6.** Mélange résineux réactif selon revendication 1, caractérisé en ce qu'il contient de 0,5 à 5 % en poids de l'amine I, par rapport au mélange résineux polyisocyanate/polyépoxyde.

**7.** Utilisation des mélanges résineux réactifs selon revendication 1, pour l'imprégnation d'isolations d'appareils électriques et pour la fabrication d'objets moulés par coulée, en tant que matières premières de l'application de revêtements, de la réalisation de collages et de la fabrication de mousses synthétiques.